(19) Europäisches Patentamt

European Patent Office

Office européen des brevets

(11) Veröffentlichungsnummer: **0 447 653 B1**

(12) # EUROPÄISCHE PATENTSCHRIFT

(45) Veröffentlichungstag der Patentschrift: **20.04.94**

(51) Int. Cl.⁵: **G01D 5/22**

(21) Anmeldenummer: **90124714.8**

(22) Anmeldetag: **19.12.90**

(54) **Induktiver Stellungsgeber.**

(30) Priorität: **15.03.90 DE 4008199**

(43) Veröffentlichungstag der Anmeldung:
**25.09.91 Patentblatt 91/39**

(45) Bekanntmachung des Hinweises auf die
Patenterteilung:
**20.04.94 Patentblatt 94/16**

(84) Benannte Vertragsstaaten:
**DE FR GB**

(56) Entgegenhaltungen:
**GB-A- 2 060 897**
**US-A- 4 851 770**

(73) Patentinhaber: **ROBERT BOSCH GMBH**
**Postfach 30 02 20**
**D-70442 Stuttgart(DE)**

(72) Erfinder: **Kleinhans, Josef, Dipl.-Ing.**
**Gerokstrasse 1/2**
**W-7143 Vaihingen/Enz(DE)**

**Beschreibung**

Stand der Technik

Die Erfindung betrifft einen induktiven Stellungsgeber, insbesondere für die Ermittlung der Drosselklappenwinkelstellung einer Brennkraftmaschine, mit einer Oszillatorschaltung und umschaltbaren Schwingkreiszweigen sowie einem mit den Schwingkreiszweigen zur stellungsabhängigen Änderung deren Eigenfrequenzen zusammenwirkenden Stellungserfassungselement und mit einer Auswerteschaltung, die aus den sich einstellenden Eigenfrequenzen die Stellung ermittelt.

In verschiedenen Bereichen der Technik ist es erforderlich, die Position eines Stellglieds (z. B. Drosselklappe) oder dergleichen zu ermitteln. Hierzu können induktive Stellungsgeber eingesetzt werden, bei denen sich in Abhängigkeit der Stellung eine Änderung der Induktivität mindestens einer Spule einstellt. Der jeweils vorliegende Induktivitätswert ist dann ein Maß für die Stellung. Gegenüber einer Stellungserfassung mittels Potentiometer besteht der Vorteil, daß induktive Stellungsgeber weniger empfindlich bei Verschmutzung sind, die zu Kontaktproblemen und damit zu Fehlmessungen führen kann. Auch unterliegen induktive Stellungsgeber aufgrund ihres berührungsfreien Funktionsprinzips einem geringeren Verschleiß.

Aus der US-C-4 644 570 ist ein induktiver Stellungsgeber der eingangs genannten Art bekannt, bei dem das Stellungserfassungselement als Differentialgeber ausgebildet ist. Dies bedeutet, daß sich zwei elektrische Größen gegenläufig in Abhängigkeit von der erfaßten Stellung verändern. Hierzu sind zwei Spulen vorgesehen, die nach dem Wirbelstromprinzip mit einem Kern zusammenarbeiten, der je nach Stellung sich der einen Spule entsprechend nähert, während er sich von der anderen Spule entsprechend entfernt. Die Spulen werden wechselweise mit einem Kondensator verbunden, so daß sich in der einen Schaltstellung ein erster Schwingkreiszweig und in der anderen Schaltstellung ein zweiter Schwingkreiszweig ergibt. Beide Schwingkrelszweige werden nacheinander mit einem Oszillator einer Oszillatorschaltung betrieben, wobei sich aufgrund der stellungsabhängigen Induktivitätswerte die zugehörigen Eigenfrequenzen einstellen. Nachteilig ist, daß der bekannte induktive Stellungsgeber nur eine relativ geringe Empfindlichkeit aufweist und ferner einer Nichtlinearität unterliegt. Ferner können durch das Umschalten der Schwingkreise Einschwingvorgänge auftreten, die das Meßergebnis verfälschen.

Vorteile der Erfindung

Der erfindungsgemäße induktive Stellungsgeber mit den im unabhängigen Anspruch 1 genannten Merkmalen hat demgegenüber den Vorteil, daß er eine große Empfindlichkeit und damit auch hohe Auflösung der Meßgröße aufweist und überdies kein Linearitätsfehler auftritt. Hierzu ist die Oszillatorschaltung mit zwei Oszillatoren versehen, die in der einen Umschaltstellung jeweils mit einem zugeordneten ersten beziehungsweise zweiten Schwingkreiszweig zusammenarbeiten, wobei in der anderen Umschaltstellung Schwingkreiselemente des ersten und des zweiten Schwingkreiszweigs derart miteinander vertauscht werden, daß jeder Oszillator mit einem so gebildeten dritten beziehungsweise vierten Schwingkreiszweig anderer Eigenfrequenz zusammenarbeitet. Mithin wirkt in der einen Umschaltstellung der eine Oszillator mit dem ersten und der andere Oszillator mit dem zweiten Schwingkreiszweig zusammen. Die Eigenfrequenzen der Schwingkreiszweige wird durch das bereits erwähnte Stellungserfassungselement bestimmt. Die Oszillatoren stellen ihre Schwingungsfrequenz auf die Eigenfrequenz der jeweiligen Schwingkreiszweige selbsttätig ein. Erfolgt nun die Umschaltung, so wirkt der erste Oszillator mit einem dritten und der zweite Oszillator mit einem vierten Schwingkreiszweig zusammen, wobei -aufgrund der stellungsabhängigen Induktivitätsänderung- sich entsprechend andere Eigenfrequenzen einstellen. Erfindungsgemäß erfolgt die Bildung des dritten und des vierten Schwingkreiszweigs dadurch, daß Schwingkreiselemente durch die Umschaltung wechselseitig "ausgetauscht" werden. Dies sei an einem Beispiel erläutert: Der eine Oszillator arbeitet in der einen Umschaltstellung mit einer ersten Spule und einem ersten Kondensator zusammen. Der zweite Oszillator betreibt in dieser einen Umschaltstellung eine zweite Spule und einen zweiten Kondensator. Nach der Umschaltung regt der erste Oszillator die zweite Spule an, die jedoch mit dem ersten Kondensator in Verbindung steht. Entsprechend wird in dieser Umschaltstellung die mit dem zweiten Kondensator verbundene erste Spule vom zweiten Oszillator betrieben. Aufgrund der sich einstellenden Eigenfrequenzen läßt sich mittels der Auswerteschaltung die vorliegende Stellung ermitteln.

Nach einer Weiterbildung der Erfindung ist vorgesehen, daß die Schwingkreiszweige -wie erwähnt- von zwei Kondensatoren und zwei Spulen gebildet werden, wobei die beiden Spulen durch die Umschaltung wechselweise auf die beiden Kondensatoren schaltbar sind. Dies wurde vorstehend bereits verdeutlicht.

Jedem Schwingkreiszweig ist eine entsprechende Eigenfrequenz zugeordnet. Die vier Schwingkreiszweige weisen folgende Schwingungsdauern auf:

Für die erste Spule gilt:

$$T11 = 2 \cdot \pi \cdot \sqrt{L1 \cdot C1}$$
$$T12 = 2 \cdot \pi \cdot \sqrt{L1 \cdot C2}$$

Für die zweite Spule gilt:

$$T21 = 2 \cdot \pi \cdot \sqrt{L2 \cdot C1}$$
$$T22 = 2 \cdot \pi \cdot \sqrt{L2 \cdot C2,}$$

wobei die Schwingungsdauer T11 dem ersten Schwingkreiszweig, die Schwingungsdauer T22 dem zweiten Schwingkreiszweig, die Schwingungsdauer T21 dem dritten Schwingkreiszweig und die Schwingungsdauer T12 dem vierten Schwingkreiszweig zugeordnet ist.

Insbesondere ist vorgesehen, daß die Auswerteschaltung eine vorbestimmte Anzahl N von Schwingungen vorgibt, der in der einen Umschaltstellung eine erste Zeitspanne N • T11 des ersten Schwingkreiszweigs zugeordnet ist und daß innerhalb der zur ersten Zeitspanne N • T11 gleich großen sowie gleichzeitig ablaufenden Zeitspanne N1 • T22 die Anzahl der Schwingungen N1 des zweiten Schwingkreiszweigs ermittelt wird. Nach dem Ablauf der N Schwingungen erfolgt die Umschaltung und die Auswerteschaltung gibt wiederum die vorbestimmte Anzahl N von Schwingungen vor, der eine dritte Zeitspanne N • T21 des dritten Schwingkreiszweigs zugeordnet ist. Innerhalb der zur dritten Zeitspanne N • T21 gleich großen sowie gleichzeitig ablaufenden vierten Zeitspanne N2 • T12 wird die Anzahl der Schwingungen N2 des vierten Schwingkreiszweigs ermittelt.

Vorzugsweise wird aus den ermittelten Größen N1 und N2 nunmehr durch die Auswerteschaltung die entsprechende Stellung ermittelt. Hierzu bildet die Auswerteschaltung das Verhältnis

$$\frac{N1 - N2}{N1 + N2}$$

Dieses Verhältnis ist proportional zur zu ermittelnden Stellung, wobei erfindungsgemäß eine Linearität zum Stellungsbereich (insbesondere Stellungswinkelbereich) sowie eine große Empfindlichkeit vorliegt.

Um Meßfehler zu vermeiden, nimmt die Auswerteschaltung nach einem Umschalten die Auswertung erst nach Ablauf einer Einschwingpause vor. Dies stellt sicher, daß sich einstellende Einschwingvorgänge bereits abgeklungen sind, bevor die Auswertung durchgeführt wird.

Zeichnung

Die Erfindung wird im folgenden anhand der Figuren näher erläutert. Es zeigen

Figur 1        eine Explosionszeichnung eines als Differentialgeber ausgebildeten Stellungserfassungselements eines induktiven Stellungsgebers,

Figur 2        ein Blockschaltbild des induktiven Stellungsgebers,

Figur 3a,b     Eigenfrequenzen verschiedener Schwingkreiszweige des induktiven Stellungsgebers und

Figur 4a       bis d Zustandsdiagramme verschiedener Größen der Schaltungsanordnung der Figur 2.

Beschreibung eines Ausführungsbeispiels

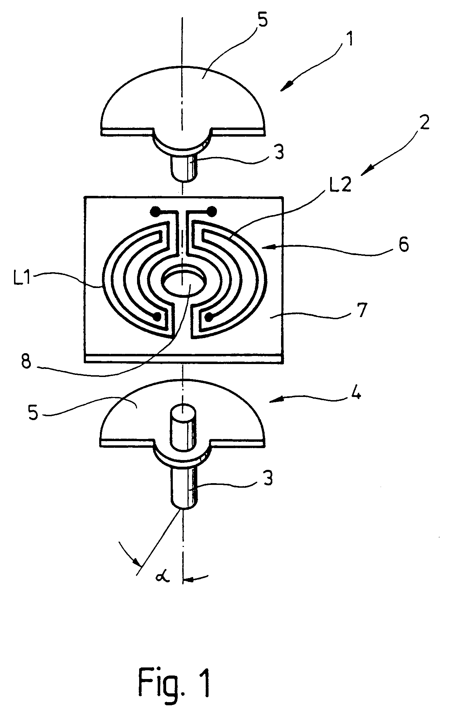

Die Figur 1 zeigt ein Stellungserfassungselement 1, eines Differentialgebers 2 für einen induktiven Stellungsgeber. Der induktive Stellungsgeber ist zur Ermittlung der Drosselklappenstellung einer Brennkraftmaschine (nicht dargestellt) eingesetzt. Mit Veränderung der Drosselklappenwinkelstellung wird eine Achse 3 eines Kerns 4 verdreht. Der Drehwinkel ist in der Figur 1 mit α gekennzeichnet. Der Kern 4, der sich aus zwei parallel zueinander verlaufenden Kreisabschnitten 5 eines plattenförmigen, elektrisch leitenden Materials zusammensetzt, wirkt mit einer Spulenanordnung 6 zusammen, die auf ein Substrat 7 in einer besonderen Konfiguration aufgebracht ist. Diese besondere Konfiguration besteht darin, daß die Spulenanordnung sich aus einer ersten Spule L1 und aus einer zweiten Spule L2 zusammensetzt, wobei beide Spulen L1 und L2 auf der Oberfläche des Substrats 7 in halbkreisförmiger Grundform um einen Durchbruch 8 herum angeordnet sind.

3

Die Figur 1 zeigt eine Explosionsdarstellung des Stellungserfassungselements 1; im Realzustand ist die Achse 3 nicht unterbrochen, sondern durchgreift den Durchbruch 8, so daß die beiden Kreisabschnitte 5 beidseitig der Spulenanordnung 6 in geringem Abstand zu dieser zu liegen kommen. Insofern wird je nach vorliegendem Drehwinkel $\alpha$ ein entsprechender Teilbereich der Spulenanordnung von den Kreisabschnitten 5 überlappt, so daß bei erregter Spulenanordnung 6 eine nach dem Wirbelstromprinzip arbeitende Rückwirkung in Abhängigkeit vom Drehwinkel $\alpha$ ausgeübt wird.

Die in der Figur 1 dargestellte Anordnung ist selbstverständlich nur ein Beispiel für ein Stellungserfassungselement. Selbstverständlich ist auch der Einsatz von andersartig gestalteten, jedoch nach dem gleichen Prinzip arbeitenden Stellungserfassungselementen möglich. Dabei kann eine Winkelstellung oder aber auch eine Wegstellung einer translatorischen Bewegungsbahn des Stellungserfassungselements erfaßt werden. Wichtig ist jedoch, daß stets zwei Spulen L1 und L2 vorgesehen sind, die mit einem Kern derart zusammenwirken, daß in dem Maße, wie die eine Spule L1 verstärkt in Wirkung mit dem Kern 4 tritt, die andere Spule L2 einer entsprechend kleineren Rückwirkung unterliegt. Insofern ist hier das Differentialprinzip realisiert.

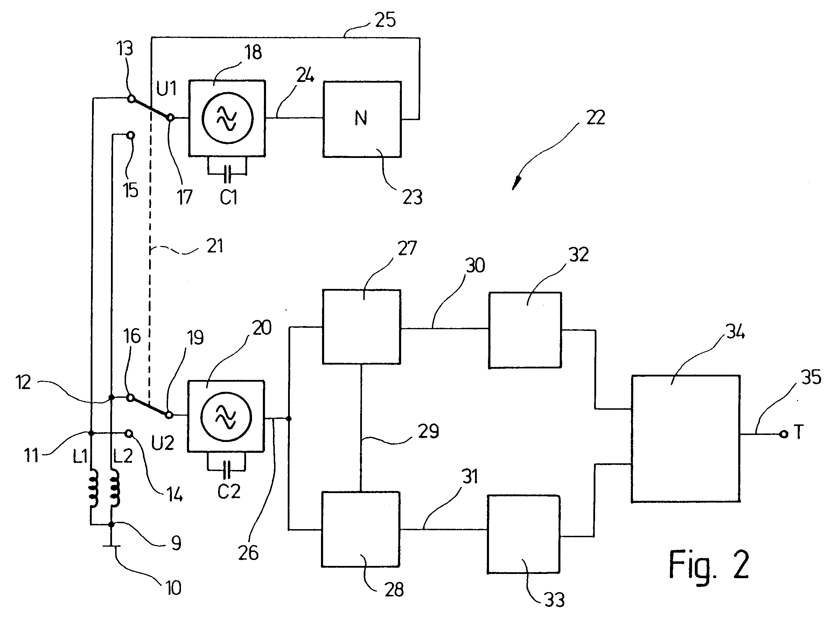

Das Stellungserfassungselement 1 ist daher Teil des induktiven Stellungsgebers, dessen Wirkungsprinzip im Blockschaltbild der Figur 2 dargestellt ist. Dort sind die bereits erwähnten Spulen L1 und L2 ersichtlich, die mit jeweils einem Anschluß an einen Summenpunkt 9 geführt sind, der an Masse 10 liegt. Die anderen Anschlüsse 11 und 12 der Spulen L1 und L2 führen zu Kontakten 13 bis 16 zweier Umschalter U1 und U2. Im einzelnen ist der Anschluß 11 der Spule L1 an einen Kontakt 13 des Umschalters U1 und an einen Kontakt 14 des Umschalters U2 angeschlossen. Der Kontakt 15 des Umschalters U1 und der Kontakt 16 des Umschalters U2 sind mit dem Anschluß 12 der Spule L2 verbunden. Der Bockpol 17 des Umschalters U1 ist an einen ersten Oszillator 18 und der Bockpol 19 des Umschalters U2 an einen zweiten Oszillator 20 angeschlossen.

Dem ersten Oszillator 18 ist ein erster Kondensator C1 und dem zweiten Oszillator 20 ein zweiter Kondensator C2 zugeordnet. Beide Umschalter U1, U2 sind über eine Wirkverbindung 21 miteinander gekoppelt, so daß sie nur synchron betätigt werden können. Dies führt dazu, daß in einer ersten Umschaltstellung -die in der Figur 2 dargestellt ist- der erste Oszillator 18 mit der ersten Spule L1 sowie dem ersten Kondensator C1 und der zweite Oszillator 20 mit der zweiten Spule L2 und dem zweiten Kondensator C2 zusammenwirkt. Dabei bildet die erste Spule L1 mit dem ersten Kondensator C1 einen ersten Schwingkreiszweig S1; ein zweiter Schwingkreiszweig S2 wird von der zweiten Spule L2 und dem zweiten Kondensator C2 gebildet.

Wenn die gekoppelten Umschalter U1 und U2 ihre andere Umschaltstellung annehmen, so wird der erste Oszillator 18 mit der zweiten Spule L2 und dem ersten Kondensator C1 und der zweite Oszillator 20 mit dem zweiten Kondensator C2 und der ersten Spule L1 verbunden. Die zweite Spule L2 bildet mit dem ersten Kondensator C1 einen dritten Schwingkreiszweig S3 und die erste Spule L1 gehört zusammen mit dem zweiten Kondensator C2 einem vierten Schwingkreiszweig S4 an.

Aus alledem ist ersichtlich, daß durch die Umschaltung die beiden Spulen L1 und L2 wechselweise mit den Kondensatoren C1 und C2 verbunden werden, so daß sich die vier Schwingkreiszweige S1 bis S4 ergeben.

Die Induktivitäten der Spulen L1 und L2 sind stellungsabhängig, das heißt, mit Änderung des Drehwinkels $\alpha$ und durch die damit einhergehende Verlagerung des Kerns 4 verändert sich die Wirbelstromkopplung, so daß aufgrund sich ändernder Induktivitäten der Schwingkreiszweige S1 bis S4 sich in entsprechender Weise verändernde Eigenfrequenzen einstellen. Betrachtet man die Schwingungsdauern der verschiedenen Schwingkreiszweige S1 bis S4, so ergibt sich folgendes:

Für die Spule L1 gilt:

$$T11 = 2 \cdot \pi \cdot \sqrt{L1 \cdot C1}$$
$$T12 = 2 \cdot \pi \cdot \sqrt{L1 \cdot C2}$$

Für die zweite Spule L2 ergibt sich:

$$T21 = 2 \cdot \pi \cdot \sqrt{L2 \cdot C1}$$
$$T22 = 2 \cdot \pi \cdot \sqrt{L2 \cdot C2}$$

Die Figur 2 zeigt ferner eine Auswerteschaltung 22, die aus den sich einstellenden Eigenfrequenzen der Schwingkreiszweige S1 bis S4 die zugehörige Stellung (Drehwinkel $\alpha$) ermittelt. In der vereinfachten, schematisierten Darstellung der Figur 2 weist die Auswerteschaltung 22 einen Zähler 23 auf, der an den Ausgang 24 des ersten Oszillators 18 angeschlossen ist und über eine Wirkverbindung 25 mit den Umschaltern U1 und U2 zusammenarbeitet. Der Ausgang 26 des zweiten Oszillators 20 ist an einen Zähler 27 und an einen Zähler 28 angeschlossen, die untereinander über eine Leitung 29 verbunden sind. Die Ausgänge 30 und 31 der Zähler 27 und 28 führen zu Zwischenspeichern 32 und 33, die an eine Verarbeitungsschaltung 34 angeschlossen sind. Diese liefert an ihrem Ausgang 35 ein Tastverhältnis T, das proportional zur zu ermittelnden Stellung (Drehwinkel $\alpha$) ist.

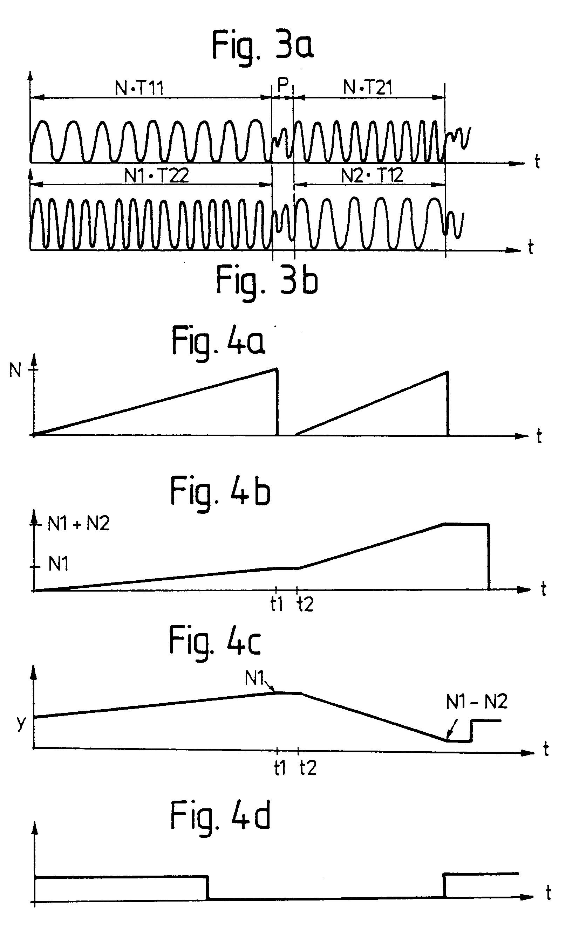

Die Funktionsweise ergibt sich aus dem folgenden: Am Zähler 23 der Auswerteschaltung 22 läßt sich eine Anzahl N von Schwingungen vorgeben. Jede Schwingung des Oszillators 18 führt somit zu einem Hochzählen des Zählers 23, bis dieser seinen Zählerstand N erreicht hat beziehungsweise die Schwingungsanzahl N vorliegt. Hierzu sei die Figur 3a betrachtet.

In der in der Figur 2 dargestellten einen Umschaltstellung der Umschalter U1 und U2 arbeitet der erste Oszillator 18 mit dem ersten Kondensator C1 und der ersten Spule L1 zusammen; es ist daher in Figur 3a die Schwingungsdauer T11 des ersten Schwingkreiszweigs S1 relevant. Mithin ist nach N Schwingungen eine erste Zeitspanne N • T11 abgelaufen (in dem dargestellten Ausführungsbeispiel beträgt N = 9; am Zähler 23 ist daher die Anzahl N = 9 vorgegeben worden). Gleichzeitig und in derselben Umschaltstellung liegt im zweiten Schwingkreiszweig S2 die Schwingungsdauer T22 vor, wobei die Anzahl N1 der zugehörigen Schwingungen in der entsprechend zur ersten Zeitspanne N • T11 gleich großen, zweiten Zeitspanne N1 • T22 von der Größe der zweiten Spule L2 und dem zweiten Kondensator C2 abhängig ist (Figur 3b). Da die Kondensatoren C1 und C2 in ihrer Größe unveränderbar sind und nur die Spulen L1 und L2 in Abhängigkeit von der vorliegenden Stellung entsprechend variierende Kapazitätswerte aufweisen, ist die Schwingungszahl N1 also stellungsabhängig. Die Anzahl N1 der Schwingungen wird von der Auswerteschaltung 22 ermittelt.

Ist die erste Zeitspanne N • T11 abgelaufen, das heißt, der Zähler 23 hat seinen Endwert erreicht, so schaltet dieser die Umschalter U1 und U2 in ihre andere Umschaltstellung. Hierdurch arbeitet der erste Oszillator 18 mit der ersten Kapazität C1 und der zweiten Spule L2 und der zweite Oszillator 20 mit der zweiten Kapazität C2 und der ersten Spule L1 zusammen. Durch den Umschaltvorgang wird der Zähler 23 rückgesetzt und im nachfolgenden gibt die Auswerteschaltung, das heißt, der Zähler 23, wieder die vorbestimmte Schwingungsanzahl N vor. Hierdurch ergibt sich eine dritte Zeitspanne N • T21, die daraus resultiert, daß von dem Zähler 23 N Schwingungen zugelassen werden und die Schwingungsdauer T21 in der vorliegenden Umschaltstellung für den ersten Oszillator 18 relevant ist. Gleichzeitig arbeitet der zweite Oszillator mit dem vierten Schwingkreiszweig S4 zusammen, dem die Schwingungsdauer T12 zugeordnet ist. Hieraus ergibt sich eine zu der dritten Zeitspanne N • T21 gleich große vierte Zeitspanne N2 • T12, wobei die Anzahl N2 der Schwingungen des vierten Schwingkreiszweigs S4 ermittelt wird (Figur 3b).

Der Zähler 27 ist nun derart ausgebildet, daß er die Summe der Schwingungsanzahl N1 und N2 bildet, während der Zähler 28 die Differenz der Schwingungszahlen N1-N2 ermittelt. Die festgestellten Werte werden zu den Zwischenspeichern 32 beziehungsweise 33 übertragen und der Verarbeitungsschaltung 34 zur Verfügung gestellt, die das Verhältnis:

$$\frac{N1 \ - \ N2}{N1 \ + \ N2}.$$

bildet.

Mathematisch ergibt sich im einzelnen folgendes: Für die Anzahl N der Schwingungen gilt:

$$N \cdot T11 \ = \ N1 \cdot T22$$

und

$$N \cdot T21 \ = \ N2 \cdot T12.$$

Bildet man das bereits erwähnte Verhältnis, so ergibt sich:

$$\frac{N1 - N2}{N1 + N2} = \frac{N \cdot T11/T22 - N \cdot T21/T12}{N \cdot T11/T22 + N \cdot T21/T12}$$

$$= \frac{T11 \cdot T12 - T21 \cdot T22}{T11 \cdot T12 + T21 \cdot T22}$$

Setzt man für die Schwingungsdauern die entsprechenden Beziehungen für die Schwingkreiselemente ein, so ergibt sich:

$$\frac{N1 - N2}{N1 + N2} = \frac{\sqrt{L1^2 \cdot C1 \cdot C2} - \sqrt{L2^2 \cdot C1 \cdot C2}}{\sqrt{L1^2 \cdot C1 \cdot C2} + \sqrt{L2^2 \cdot C1 \cdot C2}}$$

$$= \frac{L1 - L2}{L1 + L2}$$

Aufgrund des Differentialverhaltens läßt sich folgende Beziehung festlegen:

$L1 = L0 + \delta L$
$L2 = L0 - \delta L$

Setzt man diese Beziehung in die vorstehende Gleichung ein, so ergibt sich:

$$\frac{N1 - N2}{N1 + N2} = \frac{L0 + \delta L - L0 - \delta L}{L0 + \delta L + L0 - \delta L}$$

$$= \delta L/L0 = C \cdot \alpha$$

Bei der letzten Beziehung ist vorausgesetzt, daß eine Induktivitätsänderung linear mit der Gebergröße (hier Drehwinkel $\alpha$) zusammenhängt.

Hieraus ist ersichtlich, daß die Ausgangsgröße des erfindungsgemäßen Stellungsgebers linear vom Drehwinkel $\alpha$ ist. Mit c (Konstante) ist die Empfindlichkeit der Schaltung gekennzeichnet.

Betrachtet man die aus dem aufgezeigten Stand der Technik bekannte Schaltung, so hat diese lediglich zwei Schwingkreiszweige, die die Schwingungsdauern

$T1 = 2 \cdot \pi \cdot \sqrt{L1 \cdot C}$
$T2 = 2 \cdot \pi \cdot \sqrt{L2 \cdot C}$

aufweisen. Bildet man hieraus ein umgeformtes Tastverhältnis, so ergibt sich:

6

$$x = \frac{T1 - T2}{T1 + T2}$$

$$= \frac{\sqrt{L1} - \sqrt{L2}}{\sqrt{L1} + \sqrt{L2}} \approx \frac{1}{2} \cdot \frac{\delta L}{L0} \cdot [1 + \frac{1}{4} \cdot (\delta L/L0)^2]$$

Für die Ausgangsgröße x gilt demgemäß

$$x = \frac{1}{2} \cdot C \cdot \alpha \cdot [1 + \frac{1}{4} \cdot (C \cdot \alpha)^2]$$

Die Empfindlichkeit der Schaltung ist damit $1/2 \cdot C$; der Linearitätsfehler beträgt $1/4 \cdot (C \cdot \alpha)^2$.

Vergleicht man diese Ergebnisse mit der erfindungsgemäßen Anordnung, so stellt man bei der letzteren die doppelte Empfindlichkeit fest. Ferner ist die bei der bekannten Schaltung vorhandene Nichtlinearität bei der erfindungsgemäßen Anordnung nicht gegeben.

Betrachtet man die Figuren 3 a und b, so wird deutlich, daß zwischen den Zeitspannen $N \cdot T11$ und $N \cdot T21$ beziehungsweise $N1 \cdot T22$ und $N2 \cdot T12$ eine Einschwingpause P liegt. Diese kann in der vorgeschlagenen Erfindung durch schaltungstechnische Maßnahmen (z. B. Monoflop hält Zählerstände an) realisiert werden. Hierdurch bleiben Einschwingvorgänge, die durch das Umschalten der Umschalter U1 und U2 auftreten, unberücksichtigt, wodurch Meßfehler vermieden werden.

Die Figur 4a gibt den Zustand am Ausgang 24 des Zählers 18 wieder. Es ist ersichtlich, daß dieser innerhalb der ersten beziehungsweise zweiten und innerhalb der dritten beziehungsweise vierten Zeitspanne stets bis auf den Wert N hochzählt und dann wieder rückgesetzt wird. Die Figur 4b betrifft den Ausgang 30 des Zählers 27. Dieser zählt zunächst bis zum Zeitpunkt t1 bis auf den Wert N1 und dann -ab dem Zeitpunkt t2- auf den Wert $N1 + N2$.

In der Figur 4c ist der Ausgang 31 des Zählers 28 dargestellt, der -ausgehend von einem Wert y- bis zum Zeitpunkt t1 auf den Wert N1 hochzählt und dann -ab dem Zeitpunkt t2- um den Wert N2 herunterzählt, so daß sich der Wert N1 - N2 ergibt.

Am Ausgang 35 der Verarbeitungsschaltung 34 steht das Tastverhältnis T zur Verfügung, das sich nach der Beziehung

$$T = 0,5 + \frac{N1 - N2}{N1 + N2}$$

ergibt (Figur 4d), wobei der Term 0,5 bewußt erzeugt wird, um keine negativen Ausgangswerte zu erhalten (diese würden sich einstellen, wenn $N2 > N1$ ist).

Mithin stellt der Term 0,5 lediglich ein Offset dar.

**Patentansprüche**

**1.** Induktiver Stellungsgeber, insbesondere für die Ermittlung der Drosselklappenwinkelstellung einer Brennkraftmaschine, mit einer Oszillatorschaltung und umschaltbaren Schwingkreiszweigen sowie einem mit den Schwingkreiszweigen zur stellungsabhängigen Änderung deren Eigenfrequenzen zusammenwirkenden Stellungserfassungselement (1) und mit einer Auswerteschaltung (22), die aus den sich einstellenden Eigenfrequenzen die Stellung ermittelt, **dadurch gekennzeichnet**, daß die Oszillatorschaltung zwei Oszillatoren (18,20) aufweist, die in der einen Umschaltstellung jeweils mit einem zugeordneten ersten (S1) beziehungsweise zweiten Schwingkreiszweig (S2) zusammenarbeiten und daß in der anderen Umschaltstellung Schwingkreiselemente (L1,L2) des ersten (S1) und zweiten Schwingkreiszweigs (S2) derart miteinander vertauscht werden, daß jeder Oszillator (18,20) mit einem dritten (S3) beziehungsweise einem vierten Schwingkreiszweig (S4) anderer Eigenfrequenz zusammenarbeitet.

**2.** Stellungsgeber nach Anspruch 1, **dadurch gekennzeichnet**, daß die Schwingkreiszweige (S1 bis S4) von zwei Kondensatoren (C1,C2) und zwei Spulen (L1,L2) gebildet werden, wobei die beiden Spulen (L1,L2) durch die Umschaltung wechselseitig auf die beiden Kondensatoren (C1,C2) geschaltet werden.

**3.** Stellungsgeber nach einem der vorhergehenden Ansprüche, **dadurch gekennzeichnet**, daß die vier Schwingkreiszweige (S1 bis S4) folgende Schwingungsdauern aufweisen:

Für L1:

$$T11 = 2 \cdot \pi \cdot \sqrt{L1 \cdot C1},$$
$$T12 = 2 \cdot \pi \cdot \sqrt{L1 \cdot C2}$$

Für L2:

$$T21 = 2 \cdot \pi \cdot \sqrt{L2 \cdot C1},$$
$$T22 = 2 \cdot \pi \cdot \sqrt{L2 \cdot C2}$$

**4.** Stellungsgeber nach einem der vorhergehenden Ansprüche, **dadurch gekennzeichnet**, daß die Auswerteschaltung eine vorbestimmbare Anzahl N von Schwingungen vorgibt, der in der einen Umschaltstellung eine erste Zeitspanne N • T11 des ersten Schwingkreiszweigs (S1) zugeordnet ist und daß innerhalb der zur ersten Zeitspanne N • T11 gleich großen sowie gleichzeitig ablaufenden zweiten Zeitspanne N1 • T22 die Anzahl N1 der Schwingungen des zweiten Schwingkreiszweigs (S2) ermittelt wird.

**5.** Stellungsgeber nach einem der vorhergehenden Ansprüche, **dadurch gekennzeichnet**, daß die Auswerteschaltung (22) in der anderen Umschaltstellung ebenfalls die vorbestimmbare Anzahl N von Schwingungen vorgibt, der eine dritte Zeitspanne N • T21 des dritten Schwingkreiszweigs (S3) zugeordnet ist und daß innerhalb der zur dritten Zeitspanne N • T21 gleich großen sowie gleichzeitig ablaufenden vierten Zeitspanne N2 • T12 die Anzahl N2 der Schwingungen des vierten Schwingkreiszweigs (S4) ermittelt wird.

**6.** Stellungsgeber nach einem der vorhergehenden Ansprüche, **dadurch gekennzeichnet**, daß die Auswerteschaltung (22) aus den ermittelten Schwingungszahlen N1 und N2 ein zur zu ermittelnden Stellung proportionales Verhältnis

$$\frac{N1 - N2}{N1 + N2}$$

bildet.

**7.** Stellungsgeber nach einem der vorhergehenden Ansprüche, **dadurch gekennzeichnet**, daß das Stellungserfassungselement (1) mit den Spulen (L1,L2) zusammenwirkt.

**8.** Stellungsgeber nach einem der vorhergehenden Ansprüche, **dadurch gekennzeichnet**, daß mit Änderung der Lage des Stellungserfassungselements (1) die elektromagnetische Kopplung eines Kerns (4) zu den Spulen (L1 und L2) verändert wird.

**9.** Stellungsgeber nach einem der Vorhergehenden Ansprüche, **dadurch gekennzeichnet**, daß die Auswerteschaltung (22) nach einem Umschalten die Auswertung erst nach Ablauf einer Einschwingpause (P) vornimmt.

**Claims**

**1.** Inductive position sensor, in particular for determining the throttle valve angle position of an internal combustion engine, having an oscillator circuit and switchable oscillating circuit branches and a position detection element (1) which interacts with the oscillating circuit branches in order to change their natural frequencies in a position-dependent manner, and having an evaluation circuit (22) which determines the position from the natural frequencies which are obtained, characterized in that the oscillator circuit has two oscillators (18, 20) which cooperate in the one switch-over position, in each case with an assigned first (S1) or second oscillating circuit branch (S2), and in that, in the other switch-over position, oscillating circuit elements (L1, L2) of the first (S1) and second oscillating circuit branch (S2) are interchanged with one another in such a way that each oscillator (18, 20) cooperates with a third (S3) or a fourth oscillating circuit branch (S4) with a different natural frequency.

2. Position sensor according to Claim 1, characterized in that the oscillating circuit branches (S1 to S4) are formed from two capacitors (C1, C2) and two coils (L1, L2), the two coils (L1, L2) being reciprocally switched to the two capacitors (C1, C2) by the switch-over.

3. Position sensor according to one of the preceding claims, characterized in that the four oscillating circuit branches (S1 to S4) have the following periods of oscillation:

For L1:

$$T11 = 2 \cdot \pi \cdot \sqrt{L1 \cdot C1},$$
$$T12 = 2 \cdot \pi \cdot \sqrt{L1 \cdot C2}$$

For L2:

$$T21 = 2 \cdot \pi \cdot \sqrt{L2 \cdot C1},$$
$$T22 = 2 \cdot \pi \cdot \sqrt{L2 \cdot C2}$$

4. Position sensor according to one of the preceding claims, characterized in that the evaluation circuit prescribes a predeterminable number N of oscillations, to which number a first time period N • T11 of the first oscillating circuit branch (S1) is assigned in the one switch-over position, and in that the number N1 of oscillations of the second oscillating circuit branch (S2) is determined within the second time period N1 • T22 which is identical in length to the first time period N • T11 and occurs at the same time.

5. Position sensor according to one of the preceding claims, characterized in that the evaluation circuit (22) also prescribes the predeterminable number N of oscillations in the other switch-over position, to which number a third time period N • T21 of the third oscillating circuit branch (S3) is assigned, and in that the number N2 of oscillations of the fourth oscillating circuit branch (S4) is determined within the fourth time period N2 • T12 which is identical in length to the third time period N • T21 and occurs at the same time.

6. Position sensor according to one of the preceding claims, characterized in that the evaluation circuit (22) forms from the oscillation numbers N1 and N2 which have been determined a relation which is proportional to the position to be determined

$$\frac{N1 - N2}{N1 + N2}$$

7. Position sensor according to one of the preceding claims, characterized in that the position detection element (1) interacts with the coils (L1, L2).

8. Position sensor according to one of the preceding claims, characterized in that as the position of the position detection element (1) changes, the electromagnetic coupling of a core (4) to the coils (L1 and L2) is changed.

9. Position sensor according to one of the preceding claims, characterized in that the evaluation circuit (22) does not carry out the evaluation after switching over until a transient reaction pause (P) has expired.

**Revendications**

1. Indicateur inductif de position, en particulier de la position angulaire du papillon du gaz d'un moteur à combustion interne, comprenant un circuit oscillant disposant de plusieurs branches commutables, un élément de saisie de position (1) coopérant avec les branches du circuit oscillant pour modifier les fréquences propres du circuit en fonction de la variation de la position du papillon, un circuit d'évaluation (22) fournissant la position à partir des fréquences propres établies, caractérisé en ce que le circuit oscillant comporte deux oscillateurs (18, 20) qui, dans une première position de commutation, coopèrent respectivement avec une première branche (S1) et une seconde branche (S2) du circuit, tandis que dans la seconde position de commutation, les éléments (L1, L2) de la première branche (S1) et de la seconde branche (S2) sont échangés, de sorte que les oscillateurs (18, 20) coopèrent respectivement avec une troisième branche (S3) et une quatrième branche (S4) du circuit oscillant, présentant d'autres fréquences propres.

2. Indicateur de position selon la revendication 1, caractérisé en ce que les branches (S1 à S4) sont constituées de deux condensateurs (C1, C2) et de deux bobines (L1, L2), ces dernières étant, par commutation, alternativement reliées aux deux condensateurs (C1, C2).

3. Indicateur de position selon l'une des revendications précédentes, caractérisé en ce que les autre branches du circuit oscillant (S1 à S4) présentent les périodes d'oscillation suivantes :
Pour L1 :

$$T11 = 2 \cdot \pi \cdot \sqrt{L1 \cdot C1},$$
$$T12 = 2 \cdot \pi \cdot \sqrt{L1 \cdot C2}$$

Pour L2 :

$$T21 = 2 \cdot \pi \cdot \sqrt{L2 \cdot C1}$$
$$T22 = 2 \cdot \pi \cdot \sqrt{L2 \cdot C2}$$

4. Indicateur de position selon l'une des revendications précédentes, caractérisé en ce que le circuit d'évaluation fournit un nombre préimposé N d'oscillations auquel correspond, dans une première position de commutation, une première phase N•T11 de la première branche (S1) au cours de laquelle est déterminé le nombre N1 des oscillations de la seconde branche (S2) pendant le même temps, soit N1•T22.

5. Indicateur de position selon l'une des revendications précédentes, caractérisé en ce que le circuit d'évaluation (22), dans la seconde position de commutation, fournit également le nombre préimposé N d'oscillations auquel correspond dans la troisième branche (S3) une troisième phase N • T21 au cours de laquelle est déterminé le nombre N2 des oscillations de la quatrième branche (S4) pendant le même temps, soit N2•T12.

6. Indicateur de position selon l'une des revendications précédentes, caractérisé en ce que le circuit d'évaluation (22) établit, à partir des nombres d'oscillations N1 et N2 comptés, un rapport proportionnel à la position à déterminer, soit

$$\frac{N1 - N2}{N1 + N2}$$

7. Indicateur de position selon l'une des revendications précédentes, caractérisé en ce que l'élément de saisie de position (1) coopère avec les bobines (L1, L2).

8. Indicateur de position selon l'une des revendications précédentes, caractérisé en ce que la variation de la position de l'élément de saisie (1) entraîne la variation de couplage électromagnétique entre un noyau (4) et les bobines (L1 et L2).

9. Indicateur de position selon l'une des revendications précédentes, caractérisé en ce que le circuit d'évaluation (22), suite à une commutation, ne commence à opérer qu'après une pause (P) de mise en régime des oscillations.

Fig. 1

Fig. 2

# Fig. 3a

# Fig. 3b

# Fig. 4a

# Fig. 4b

# Fig. 4c

# Fig. 4d